(19) Europäisches Patentamt
European Patent Office
Office européen des brevets

(11) **EP 1 818 577 A1**

(12) **EUROPEAN PATENT APPLICATION**

(43) Date of publication:
**15.08.2007 Bulletin 2007/33**

(51) Int Cl.:
**F16H 61/662** (2006.01)

(21) Application number: **07002439.3**

(22) Date of filing: **05.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.02.2006 JP 2006030640**

(71) Applicant: **JATCO Ltd**
**Fuji-shi,**
**Shizuoka 417-8585 (JP)**

(72) Inventors:
• **Shimazu, Takamitsu**
**Fuji-shi**
**Shizuoka 417-8585 (JP)**

• **Yamaguchi, Toshiyasu**
**Fuji-shi**
**Shizuoka 417-8585 (JP)**
• **Hagiwara, Yoshichika**
**Fuji-shi**
**Shizuoka 417-8585 (JP)**

(74) Representative: **Schaeberle, Steffen**
**Hoefer & Partner**
**Patentanwälte**
**Pilgersheimer Strasse 20**
**81543 München (DE)**

(54) **Torque control device for continously variable transmission**

(57) A torque control device is provided to prevent slipping of a belt (23) of a belt type continuously variable transmission (20). The torque control device calculates a positive input torque inputted from an engine (80) to a primary pulley (21), and calculates a reverse input torque inputted from a drive wheel (70) to the primary pulley based on the positive input torque and a speed ratio of a continuously variable section. The torque control device then restricts an output torque from the engine so that the total torque can be lower than or equal to the torque capacity of the belt when the vehicle is in a running state in which the reverse input torque is likely to occur and the total torque which is the sum of the positive input torque and the reverse input torque exceeds the torque capacity.

Fig. 1

EP 1 818 577 A1

**Description**

CROSS-REFERENCE TO RELATED APPLICATIONS

This application claims priority to Japanese Patent Application No. 2006-030640, filed on February 8, 2006. The entire disclosure of Japanese Patent Application No. 2006-030640 is hereby incorporated herein by reference.

BACKGROUND OF THE INVENTION

Field of the Invention

The present invention generally relates to a torque control device for vehicles. More specifically, the present invention relates to a torque control device for a vehicle having an engine connected to a belt type continuously variable transmission. Background Information

When a vehicle having a conventional belt type continuously variable transmission is traveling on off-road terrain, a possibility exists that a drive wheel may begin to slip. After the drive wheel that has been slipping regains traction, there is possibility that the belt may slip on the pulleys of the continuously variable transmission due to an input torque from the drive wheel regaining traction. Thus, there is a need to balance the input torque (called hereinafter "a reverse input torque") resulting from the drive wheel regaining traction and the input torque (called hereinafter "a positive input torque") to the primary pulley from the engine. In order to prevent the belt of the continuously variable transmission from slipping, a torque capacity control has been proposed, for example, in Japanese Laid-Open Patent Publication No. 2004-116606. In this publication, the torque capacity control attempts to prevent the belt of the continuously variable transmission from slipping by increasing hydraulic pressures supplied to the primary and secondary pulleys to raise torque capacity of the belt upon detecting a loss of traction in the drive wheel.

SUMMARY OF THE INVENTION

However, it has been discovered that according to the prior art, because the hydraulic pressures supplied to the primary and secondary pulleys increases after detecting slippage of the drive wheel, the increase in the hydraulic pressures of the pulleys is often too late to prevent the belt from slipping.

One object of the present invention is to provide a torque control device for a vehicle that controls an output torque of an engine with a good response time in order to prevent slipping of a belt of the continuously variable transmission.

In accordance with one aspect of the present invention, a torque control device is provided that basically comprises a speed ratio calculation section, a running state determination section, a positive input torque calculation section, a reverse input torque calculation section, a torque capacity calculation section, a torque comparison section and a torque control section. The speed ratio calculation section is configured to calculate a speed ratio between a primary pulley and a secondary pulley of a belt type continuously variable transmission. The running state determination section is configured to determine if a vehicle running state exists in which a reverse input torque will be likely to be inputted to the primary pulley from a drive wheel. The positive input torque calculation section is configured to calculate a positive input torque that is inputted to the primary pulley from an engine. The reverse input torque calculation section is configured to calculate a reverse input torque based on the speed ratio and the positive input torque that were calculated. The torque capacity calculation section is configured to calculate a maximum torque capacity of the belt type continuously variable transmission. The torque comparison section is configured to compare the maximum torque capacity to a total torque which is a sum of the positive input torque and the reverse input torque. The torque control section is configured to restrict an output torque of the engine so that the total torque becomes lower than or equal to the maximum torque capacity when the total torque exceeds the maximum torque capacity upon determining the vehicle running state existing in which the reverse input torque will likely be inputted to the primary pulley from the drive wheel.

These and other objects, features, aspects and advantages of the present invention will become apparent to those skilled in the art from the following detailed description, which, taken in conjunction with the annexed drawings, discloses a preferred embodiment of the present invention.

BRIEF DESCRIPTION OF THE DRAWINGS

Referring now to the attached drawings which form a part of this original disclosure:

Figure 1 is a simplified schematic view of a vehicle equipped with a belt type continuously variable transmission in accordance with a first embodiment of the present invention;

Figure 2 is a graph for explaining slipping of the belt of the belt type continuously variable transmission;

Figure 3 is another graph for explaining slipping of the belt of the belt type continuously variable transmission;

Figure 4 is a graph for explaining a method of setting the positive input torque that has been determined taking into account a reverse input torque;

Figure 5 is a map used to calculate the positive input torque based on the rotational speed of the a primary pulley and a speed ratio of a continuously variable section; and

Figure 6 is a flow chart showing the control operations executed by the control unit in order to control the output torque of the engine.

DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

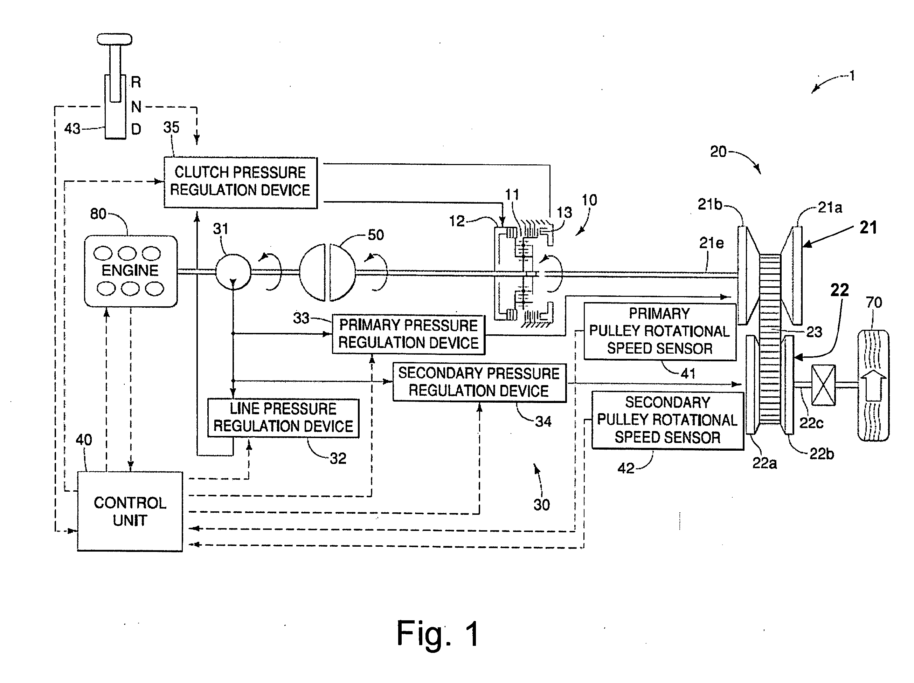

Referring initially to Figure 1, a vehicle 1 is schematically illustrated that is equipped with a first embodiment of the present invention. The belt vehicle 1 basically includes, among other things, a clutch section 10, a belt type continuously variable transmission 20, a hydraulic pressure regulation section 30 and a control unit 40. The belt type continuously variable transmission 20 has a primary pulley 21, a secondary pulley 22 and a V-belt 23. The V belt 23 winds around the primary pulley 21 and the secondary pulley to transmit rotation of the primary pulley 21 to the secondary pulley 22.

The hydraulic pressure regulation section 30 has a hydraulic pressure pump 31, a line pressure regulation device 32, a primary pressure regulation device 33, a secondary pressure regulation device 34 and a clutch pressure regulation device 35.

The control unit 40 preferably includes a microcomputer with a torque control program that controls the hydraulic pressure regulation section 30 and the engine 60 as discussed below. The control unit 40 controls engine torque and speed by controlling fuel injection amount to the engine 60 and throttle position. The control unit 40 can also include other conventional components such as an input interface circuit, an output interface circuit, and storage devices such as a ROM (Read Only Memory) device and a RAM (Random Access Memory) device. It will be apparent to those skilled in the art from this disclosure that the precise structure and algorithms for the control unit 40 can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

The vehicle 1 is configured and arranged to control the rotational speed of an engine 60 that variably transmits a rotational torque to one or more drive wheels 70. In addition, the vehicle that is equipped with the belt type continuously variable transmission 20 of the present invention also has a torque converter 50 located between the engine 60 and the clutch section 10. This torque converter 50 is a conventional torque converter, which includes a turbine, an impeller and a stator. Thus, the torque converter 50 transmits torque from the engine 60 by controlling the flow of oil in a conventional manner. The torque converter 50 also preferably has a so-called lock-up mechanism.

The input torque $T_{in}$ and the output torque $T_{out}$ of the torque converter 50 can be expressed by the following equations (1) and (2), respectively:

$$T_{in} = \tau \times Ne^2 \qquad\qquad (1)$$

$$T_{out} = \tau \times Ne^2 \times t \qquad\qquad (2)$$

where: Ne represents engine speed (rpm.);

$\tau$ represents a torque converter capacity coefficient; and
t represents a torque converter torque ratio.

In this way, engine speed determines the torque to be transmitted by the torque converter 50.

The clutch section 10 has a planetary gear set 11, a forward clutch 12 and a reverse brake 13. The planetary gear set 11 is configured to change power transmission paths between the engine 60 and the primary pulley 21. The clutch section 10 uses hydraulic pressure supplied by a clutch pressure regulation device 35 for operating the forward clutch 12 and the reverse brake 13. In particular, the clutch section 10 engages the forward clutch 12 at the time of forward drive of the vehicle, and engages the reverse brake 13 at the time of reverse drive of the vehicle. Also, the clutch section 10 releases both of the forward clutch 12 and the reverse brake 13 at a neutral position (Neutral or Parking). The clutch pressure regulation device 35 controls a state of engagement of each of the forward clutch 12 and the reverse brake 13 by regulating hydraulic pressures (forward clutch pressure & reverse clutch pressure) supplied to the forward clutch 12 and the reverse brake 13 in accordance with control signals from the control unit 40.

Engagement of the forward clutch 12 and engagement of the reverse brake 13 are performed exclusively by controlling the supply of hydraulic pressure to the forward clutch 12 and the reverse brake 13. The supply of hydraulic pressure to the forward clutch 12 and the reverse brake 13 is controlled such that a forward clutch pressure engages the forward clutch 12 and a reverse clutch pressure releases the reverse brake 13 at the time of forward drive (range signal = D range). The supply of hydraulic pressure to the forward clutch 12 and the reverse brake 13 is further controlled such that the forward clutch pressure releases the forward clutch 12 and the reverse clutch pressure engages the reverse brake 13 at the time of rearward drive (range signal = R range). In the neutral position (range signal = N range), supply of hydraulic pressure to the forward clutch 12 and the reverse brake 13 is further controlled such that the forward clutch pressure and the reverse clutch pressure release the forward clutch 12 and the reverse brake 13.

The primary pulley 21 is a pulley on the input shaft side to input rotation from the engine 60. The primary pulley 21 has a stationary conical sheave 2 1 a and a movable conical sheave 21b. The stationary conical sheave 21a is fixed to an input shaft 21c so that the stationary conical sheave 21 a rotates together with the input shaft 21c. The movable conical sheave 21 b faces the stationary conical sheave 21a to form a V-shaped pulley groove therebetween. The movable conical sheave 21b is also fixed to the input shaft 21c so that the stationary conical sheave 21a rotates together with the input shaft 21 c. However, the movable conical sheave 21 b is slideably mounted on the input shaft 21 c so that the movable conical sheave 21b can be displaced in an axial direction by hydraulic pressure applied to the primary pulley. This hydraulic pressure that is applied to the primary pulley 21 will be called "primary pressure" herein. The rotational speed of the primary pulley 21 is detected a primary pulley rotational speed sensor 41.

The secondary pulley 22 is rotated by the V belt 23, which is rotated by the primary pulley 21. The secondary pulley 22 then transmits rotation to at least one drive wheel 70 via an idler gear and a differential gear in a conventional manner. The secondary pulley 22 has a stationary conical sheave 22a and a movable conical sheave 22b. The stationary conical sheave 22a is fixed to an output shaft 22c so that the stationary conical sheave 22a rotates together with the output shaft 22c. The movable conical sheave 22b faces the stationary conical sheave 22a to form a V-shaped pulley groove therebetween. The movable conical sheave 22b is also fixed to the output shaft 22c so that the stationary conical sheave 22a rotates together with the output shaft 22c. However, the movable conical sheave 22b is slideably mounted on the output shaft 22c so that the movable conical sheave 22b can be displaced in an axial direction by hydraulic pressure applied to the secondary pulley 22. This hydraulic pressure that is applied to the secondary pulley 22 will be called "secondary pressure" herein. Pressure acting area of the secondary pulley 22 and pressure acting area of the primary pulley 21 are the same or approximately equal to each other. The rotational speed of the secondary pulley 22 is detected a secondary pulley rotational speed sensor 42. In addition, a vehicle speed is calculated by the rotational speed of the secondary pulley 22.

The hydraulic pressure pump 31 is connected to an input side of the clutch section 10 and driven by the engine 60, and feeds oil at the required pressures.

The line pressure regulation device 32 regulates pressure of the oil fed by the hydraulic pressure pump 31 in accordance with an order (for example, a duty signal etc.) from the control unit 40 to an appropriate level of line pressure variable depending on different driving states.

The primary pressure regulation device 33 is a device to control the primary pressure, and it is constituted, for example, by a solenoid, the servo link and stepper motor which cooperate with each other to form a mechanical feedback mechanism, and etc.

The secondary pressure regulation device 34 performs further pressure reduction of the line pressure regulated by the line pressure regulation device 32 in accordance with an order from the control unit 40 to an appropriate level of secondary pressure variable depending on different driving states.

The clutch pressure regulation device 35 performs pressure regulation using hydraulic pressure from the hydraulic pressure pump 31 as a base pressure to produce forward clutch pressure and reverse clutch pressure. The clutch pressure regulation device 35 regulates the forward clutch pressure and the reverse clutch pressure in accordance with hydraulic pressure order values from the control unit 40 to carry out engagement and/or release of the forward clutch 12 and the reverse brake 13.

The control unit 40 determines hydraulic pressure order values based on a driving state and a driving operation that are indicated by a vehicle speed signal from the secondary pulley rotational speed sensor 42, a range signal from an inhibitor switch 43 that operates with a shift lever, an engine rotational speed signal from the engine 60 (or the engine control device), and etc. Further, the inhibitor switch 43 shows an example of choosing any one of a forward drive (D range), a neutral position = neutral (N range), and a reverse (R range).

In addition, the control unit 40 controls the clutch pressure regulation device 35 to regulate the hydraulic pressures supplied to the forward clutch 12 and the reverse brake 13 to control the forward clutch pressure and the reverse brake pressure, and thus, to control the states of engagement of the forward clutch 12 and the reverse brake 13.

Furthermore, the control unit 40 determines a target speed ratio by reading an input torque information, a ratio (a speed ratio) between the primary pulley rotational speed and the secondary pulley rotational speed, a selector position from the inhibitor switch 43, a vehicle speed (the secondary pulley rotational speed), a depression amount of the accelerator pedal, a hydraulic fluid (oil) temperature, hydraulic pressure and etc. The control unit 40 then determines target pressure values of the primary pressure and secondary pressure to accomplish the target speed ratio. The control unit 40 then controls the line pressure regulation device 32, the primary pressure regulation device 33, and the secondary pressure regulation device 34 to accomplish the target pressure values. Thus, the control unit 40 regulates hydraulic pressures supplied to the primary pulley 21 and secondary pulley 22 such that the movable conical sheave 21 b and movable conical sheave 22b are moved in directions along the axes of rotation of the pulleys 21 and 22 to vary a pulley width of the primary pulley 21 and a pulley width of the secondary pulley 22. Then, the V-belt 23 moves on the primary pulley 21 and the secondary pulley 22 to vary the contact radius of the V-belt 23 with the primary pulley 21 and the secondary pulley 22, controlling the speed ratio.

The rotational speed of the engine 60 is inputted to the belt type continuously variable transmission 20 via the torque converter 50 and the clutch section 10, and the torque is transmitted from the primary pulley 21 to the drive shaft of the drive wheel 70 via the V-belt 23 and the secondary pulley 22.

When the accelerator pedal is depressed and/or there is a shift change to the manual mode, the control unit 40 moves the movable conical sheave 21 b of the primary pulley 21 and the movable conical sheave 22b of the secondary pulley 22 in the axial directions to vary the contact radius of the V belt 23 for continuously varying the speed ratio.

Thus, the present invention prevents the belt 23 from slipping and controls output torque of the engine 60 by calculating the reverse input torque from the speed ratio and the positive input torque to prevent the slipping of the belt 23, and controlling the output torque of the engine 60 so that the total torque that is the sum of the positive input torque and the reverse input torque will not exceed torque capacity of the belt 23.

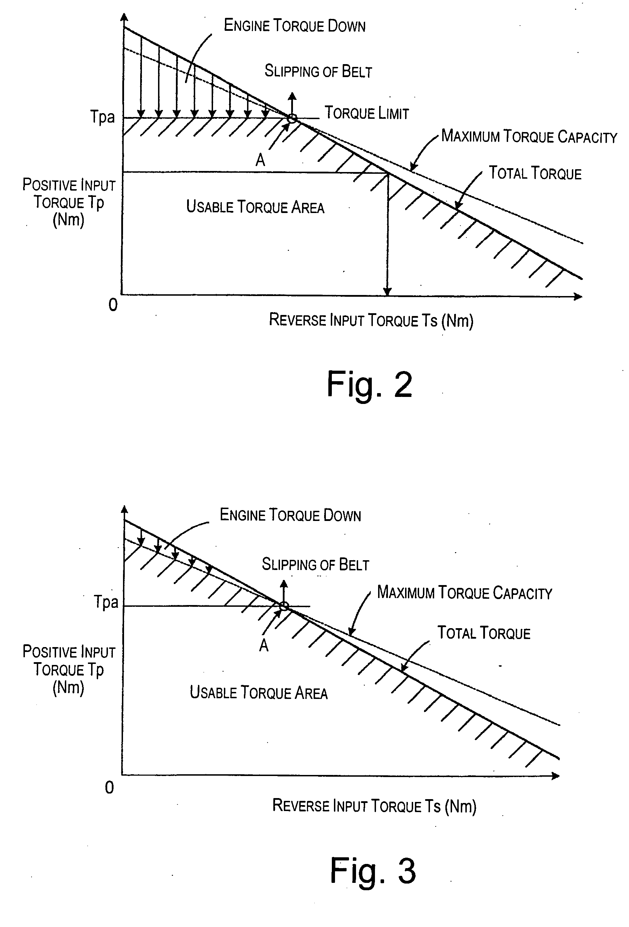

Figure 2 is a view explaining slipping of a belt from the relationship between the positive input torque Tp, which is inputted to the primary pulley 21 from the engine 60. For example, a turbine torque of the torque converter 50, and the reverse input torque Ts are inputted from the drive wheel 70 to the primary pulley 21 via the secondary pulley 22. Here, with the speed ratio kept constant, there is provided a map showing this relationship depending on the speed ratio.

Total torque (Tp + Ts) is the sum of the positive input torque Tp and the reverse input torque Ts that are inputted to the continuously variable transmission 20. The maximum of the total torque applied to the belt 23 at this time is shown by a bold solid line in Figure 2. Here, a straight line representing the total torque can be expressed by the following equation (3):

$$Ts = -k \times \frac{Tt}{ip \times if} \qquad\qquad (3)$$

where, Ts: reverse input torque,

Tp: positive input torque (turbine torque),
Tt: input torque from road surface (experimental value),
ip: speed ratio,
if: reduction ratio, and
k: predetermined value that is set according to specifications of
continuously variable section.

On the other hand, a dashed line in Figure 2 represents a maximum torque capacity that torque which the belt 23 can transmit. Here, the maximum torque capacity of the belt 23 is prescribed by hydraulic pressure permitted in strength of the continuously variable transmission 20.

As shown in Figure 2, the straight line representing the total torque applied to the belt 23 and the straight line representing the maximum torque capacity of the belt 23 are both straight lines with a negative slope or inclination. Also the straight line representing the total torque to the belt 23 has an inclination that is greater than an inclination of the straight line representing the maximum torque capacity of the belt 23. Here, because, as mentioned above, the total torque is the sum of the positive input torque and the reverse input torque, the inclination of the straight line indicates that if the positive input torque becomes large and the reverse input torque becomes small. In other words, the positive input torque will be reduced when a reverse input occurs. For example, a reverse input torque is inputted into the continuously variable transmission 20 when the drive wheel 70 collides with stone during passing over off-road terrain, and the large positive input torque that is transmitted to the continuously variable transmission 20 will be reduced.

Because the straight line representing the total torque applied to the belt 23 and the straight line representing the maximum torque capacity of the belt 23 have different degrees in inclination, these straight lines intersect at a certain point (point A in Figure 2). When the positive input torque Tp exceeds this point A, the total torque applied to the belt 23 becomes greater than the maximum torque capacity of the belt 23. In other words, when the positive input torque Tp that exceeds this point A is inputted to the continuously variable transmission 20, the belt 23 slips. On the other hand, when the positive input torque Tp is less than or equal to the point A, the belt 23 does not slip.

In the illustrated embodiment of the present invention, the belt 23 is prevented from slipping by comparing the total torque applied to the belt 23 to the maximum torque capacity of the belt 23 to determine the point A when the total torque Tp is equal to the maximum torque capacity, and setting a positive input limit torque value Tpa that corresponds to this point A as the upper limit of the positive input torque Tp. Then, the control unit 40 controls the output torque of the engine 60 so that the positive input torque Tp does not become equal to or greater than the positive input limit torque value Tpa corresponding to the point A that has been set as the upper limit. Restricting the output torque of the engine 60 using the positive input limit torque value Tpa as the upper limit makes it possible to prevent the total torque from exceeding the maximum torque capacity. This can restrain the belt from slipping.

Restriction control of the output torque of the engine 60 to prevent the belt 23 from slipping can be carried out based on the results given by providing a prestored map establishing the relationship shown in Figure 2. In particular, the reverse input torque Ts is obtained from the speed ratio of the continuously variable transmission 20 and the positive input torque Tp, while the total torque is calculated as the sum of the positive input torque Tp and the reverse input torque Ts. Then the total torque is compared to the torque capacity to determine if the output torque of the engine 60 is to be limited to prevent the belt 23 from slipping. It is sure to prevent the belt 23 from slipping by performing such a torque control to limit the output torque of the engine 60 before input of reverse input torque. In addition, the speed ratio of the continuously variable transmission 20 can be calculated from the output of the primary pulley rotational speed sensor 41 and the output of the secondary rotational speed sensor 42.

In addition, as shown in Figure 3, the control unit 40 can control the output torque of the engine 60 so that the positive input torque Tp reduces by a difference between the total torque applied to the belt 23 and the maximum torque capacity of the belt 23.

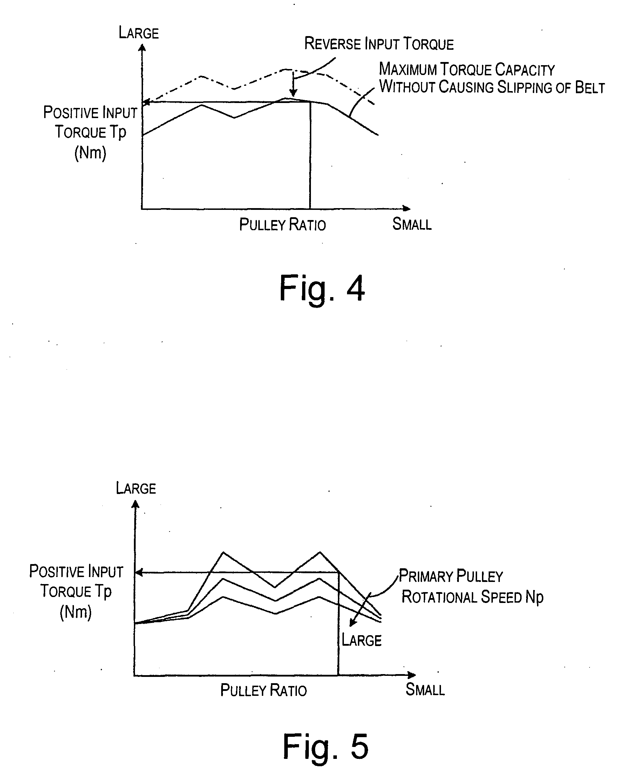

Next, using Figures 4 and 5, the torque control of the engine 60 to prevent the belt 23 from slipping is explained.

At first, referring to Figure 4, a method of setting the positive input torque Tp taking into account the reverse input torque Ts will now be explained.

Figure 4 shows the relationship, between a speed ratio (a pulley ratio) of the continuously variable transmission 20 and the positive input torque to the primary pulley 21, at a predetermined rotational speed of the primary pulley 21. The maximum torque capacity of the belt 23 considering slipping of the belt 23, that is, the maximum torque capacity of the belt when the output torque of the engine 60 is restricted so that the total torque to the belt 23 does not exceed the maximum torque capacity during restriction of output torque of the engine 60 is indicated by the one-dot chain line in Figure 4. The solid line in Figure 4 that has been set by deducting an amount for the reverse input torque Ts from the characteristic line of the maximum torque capacity becomes an indication of the positive input torque Tp to the primary pulley 21 taking into account the reverse input torque Ts. In other words, if a value given by deducing the reverse input torque Ts from the maximum torque capacity of the belt 23 is set beforehand as the maximum of the positive input torque Tp of the primary pulley 21, then the belt 23 will not slip because the maximum torque capacity of the belt 23 will not be exceeded when there is an input of the reverse input torque Ts. Here, the reverse input torque Ts is calculated, using the map shown in Figure 2, from the original torque Tp and the speed ratio of the continuously variable transmission 20.

Figure 5 is a map, which plots a map shown in Figure 4 for every rotational speed of the primary pulley 21, for calculation of the positive input torque Tp from rotational speed of the primary pulley 21 and speed ratio of the continuously variable transmission 20. Using this map, the control unit 40 calculates the positive input torque Tp to the primary pulley 21 from the rotational speed of the primary pulley 21 and the speed ratio of the continuously variable transmission 20 and sets the most suitable positive input torque Tp to restrain radial torque drop and to make the belt slip prevention compatible with the power performance of a vehicle.

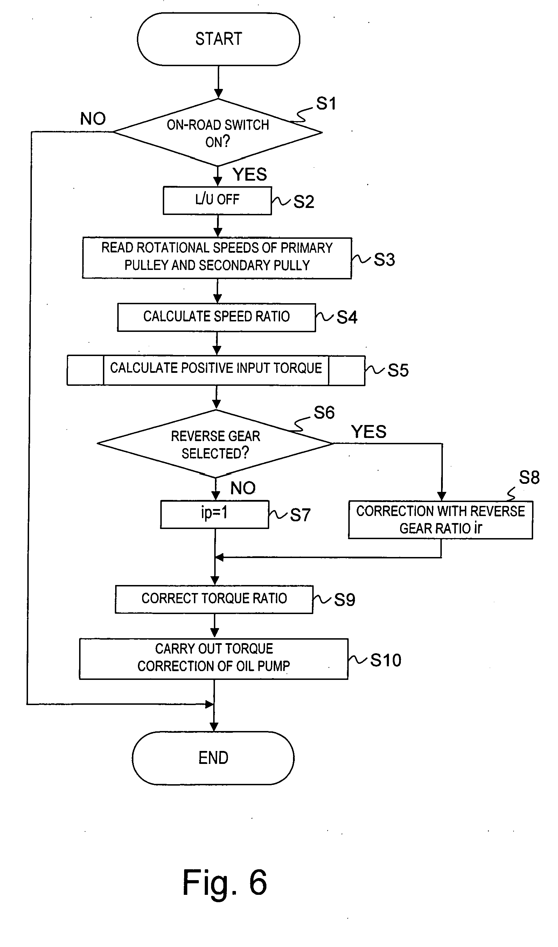

Figure 6 is a flow chart of controlling output torque of the engine 60 so that the positive input torque Tp of the primary pulley 21 which has been set using the map shown in Figure 5 is accomplished. The control unit 40 carries out this torque control every predetermined interval, for example, ten milliseconds.

At first, this flow chart begins with step S1, where the control unit 40 reads an output signal of a running mode selection switch, not illustrated, and to determine whether or not the current running mode is an off-road running mode. Here, the off-road running mode, which is suitable for passing over rough and/or muddy terrain, is a running mode having lower speed ratios than speed ratios of an on-road running mode.

When the current running mode is the off-road running mode, processing proceeds to step S2 to control the torque converter 50 to a lock-up off state. When the current running mode is the on-road running mode, there is no need for the output torque control of the engine 60 and this control ends.

In step S3, the control unit 40 reads the outputs of the rotational speed sensors 41 and 42 of the pulleys 21 and 22 to detect the rotational speed of the primary pulley 21 and the rotational speed of the secondary pulley 22. And, in step S4, the control unit 40 calculates a speed ratio of the continuously variable transmission 20.

Next in step S5, the control unit 40 calculates the positive input torque Tp of the primary pulley 21, which is determined taking into account the reverse input torque Ts, from the map shown in Figure 5 by using the calculated speed ratio and the rotational speed of the primary pulley 21.

In step S6, the control unit 40 determines whether the running state of the vehicle is a forward drive state or a reverse drive state after reading output signal of the inhibitor switch 43. When the running state of the vehicle is the reverse drive state, the control unit 40 proceeds to step S8, where the calculated positive input torque Tp that has been calculated in step S5 is divided by a reverse gear ratio ir. When the running state of the vehicle is the forward drive state, the control unit 40 proceeds to step S7, where the positive input torque Tp that has been calculated in step S5 remains unaltered, i.e., the speed ratio ip is set to "1".

In step S9, the calculated positive input torque Tp is further divided by the a torque ratio of the torque converter 50 and corrects a torque increase/decrease due to the torque converter 50.

Next in step S10, the control unit 40 corrects the positive input torque Tp with a torque loss due to the hydraulic pressure pump 31. In particular, a correction amount is added to the input torque for this torque loss due to the hydraulic pressure pump 31.

In this way, taking into account the reverse input torque Ts, an output torque of the engine 60 for the positive input torque Tp, which can prevent the V-belt 23 from slipping, is calculated.

As explained above, the control unit 40 prevents the belt 23 from slipping and controls the output torque of the engine 60 by predicting the reverse input torque Ts before the actual application of the reverse input torque Ts, because the reverse input torque Ts which is inputted to the primary pulley 23 from the drive wheel is calculated from the speed ratio of the continuously variable transmission 20 and the positive input torque Tp. In other words, the control unit 40 restricts the output torque of the engine 60 to reduce the positive input torque Tp so that the total torque can be lower than or equal to the torque capacity of the belt 23 when the vehicle is in the running state in which the reverse input torque is likely to occur and the total torque is likely to exceeds the calculated torque capacity.

GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

**Claims**

1. A torque control device comprising:

   a speed ratio calculation section (40) configured to calculate a speed ratio between a primary pulley (21) and a secondary pulley (22) of a belt type continuously variable transmission (20);
   a running state determination section (40) configured to determine if a vehicle running state exists in which a reverse input torque will be likely to be inputted to the primary pulley (21) from a drive wheel (70);
   a positive input torque calculation section (40) configured to calculate a positive input torque that is inputted to the primary pulley (21) from an engine (80);
   a reverse input torque calculation section (40) configured to calculate a reverse input torque based on the speed ratio and the positive input torque that were calculated;
   a torque capacity calculation section (40) configured to calculate a maximum torque capacity of the belt type continuously variable transmission (20);
   a torque comparison section (40) configured to compare the maximum torque capacity to a total torque which is a sum of the positive input torque and the reverse input torque; and
   a torque control section (40) configured to restrict an output torque of the engine (80) so that the total torque becomes lower than or equal to the maximum torque capacity when the total torque exceeds the maximum torque capacity upon determining the vehicle running state existing in which the reverse input torque will likely be inputted to the primary pulley (21) from the drive wheel (70).

2. The torque control device as recited in claim 1, wherein
   the torque control section (40) is further configured to calculate an upper limit value of the positive input torque at which the maximum torque capacity is equal to the total torque when a predetermined speed ratio is established in the continuously variable transmission (20), and
   the torque control section (40) is further configured to control the output torque of the engine (80) so that the positive input torque is maintained at the upper limit value when the total torque is greater than or equal to the maximum torque capacity.

3. The torque control device as recited in claim 1, wherein
   the torque control section (40) is further configured to calculate a difference between the total torque and the maximum torque capacity when the total torque exceeds the maximum torque capacity, and
   the torque control section (40) is further configured to restrict the output torque of the engine (80) depending on the difference that was calculated so that the total torque is equal to the maximum torque capacity.

4. The torque control device as recited in claim 1, wherein
   the running state determination section (40) is further configured to determine an off-road running state as the vehicle running state.

5. The torque control device as recited in claim 1, wherein
   the reverse input torque calculation section (40) is further configured to calculate the reverse input torque from the positive input torque and the speed ratio using a map establishing a relationship between the positive input torque, the reverse input torque and the total torque.

Fig. 1

Fig. 2

Fig. 3

LARGE

REVERSE INPUT TORQUE

MAXIMUM TORQUE CAPACITY
WITHOUT CAUSING SLIPPING OF BELT

POSITIVE INPUT
TORQUE Tp
(Nm)

PULLEY RATIO          SMALL

## Fig. 4

LARGE

POSITIVE INPUT
TORQUE Tp
(Nm)

PRIMARY PULLEY
ROTATIONAL SPEED Np

LARGE

PULLEY RATIO          SMALL

## Fig. 5

## Fig. 6

**European Patent Office**

**DECLARATION**

which under Rule 45 of the European Patent Convention
shall be considered, for the purposes of subsequent
proceedings, as the European search report

Application Number

EP 07 00 2439

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>The application does not meet the requirements of Article 83 and 84 EPC respectively, which requires that<br>- the application must disclose the invention in a manner sufficiently clear and complete for it to be carried out by a person skilled in the art;<br>- the claims shall define the matter for which protection is sought, be clear and concise and be supported by the description;<br>Objections concerning Claims 1 and 5:<br>The term "reverse input torque" used in claims 1 and 5 is vague and unclear.<br>Claim 1 defines that the calculation of a "reverse input torque" Ts is based on the speed ratio and the "positive input torque" (see also description page 8, [0036]).<br>However the description explains (see page 9, equation (3)), that the calculation for a "reverse input torque Ts" is based on an "input torque from road surface (experimental value) Tt" and not on the "positive input torque (turbine torque) Tp".<br>Since the calculation of a "reverse input torque" Ts is important for the invention and basis for the calculation of a total torque (Tp+Ts), the calculation of Ts has to be considered as an essential feature of the application. If the above calculation is unclear, the torque control device according claim 1 of the present application can not be carried out by a person skilled in the art.<br>Moreover it is not clear what kind of torque a "reverse input torque" Ts should represent. The description mentions, that<br>-/-- | INV.<br>F16H61/662 |

| Place of search | Date | Examiner |
|---|---|---|
| Munich | 13 June 2007 | Werner, Michael |

**European Patent Office**

## DECLARATION

which under Rule 45 of the European Patent Convention shall be considered, for the purposes of subsequent proceedings, as the European search report

**Application Number**

EP 07 00 2439

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|

Reason:

the "reverse input torque" results from the drive wheel regaining traction, but it is absolutely unclear, why then this "reverse input torque" is based on the "positive input torque" Tp.
Objections concerning the description and figures:
The description defines, that the total torque can be expressed by an equation (3), however this equation does not comprise the parameter "total torque", but a parameter "Tt", which represents an "input torque from road surface (experimental value) (see page 8, [0038])
.
Thus figure 2 is unclear since it is based on the unclear equation (3).
Because of the above mentioned objection, the relationship between the "positive input torque" Tp and the "reverse input torque" Ts in figure 2 is not clear.
Figure 4 is unclear, since it seems that the "reverse input torque" has always the same level at a predetermined rotational speed of the primary pulley 21 (see page 11, [0047]). However according the description the "reverse input torque" is calculated from the speed ratio (pulley ratio) and the "positive input torque" and thus the "reverse input torque" should be variable.
For the sake of completeness, it is pointed out that the reference line in figure 4 for the "maximum torque capacity without causing slipping of belt" has to be corrected.
The dependent claims 2-4 are also unclear, since they are referred back to the unclear independent claim 1.

-/--

| Place of search | Date | Examiner |
|---|---|---|
| Munich | 13 June 2007 | Werner, Michael |

**European Patent**
**Office**

**DECLARATION**

which under Rule 45 of the European Patent Convention EP 07 00 2439
shall be considered, for the purposes of subsequent
proceedings, as the European search report

Application Number

| The Search Division considers that the present application, does not comply with the provisions of the EPC to such an extent that it is not possible to carry out a meaningful search into the state of the art on the basis of all claims<br><br>Reason:<br><br>     Because of the above-noted objections a search was not possible.<br><br>     The applicant's attention is drawn to the fact that a search may be carried out during examination following a declaration of no search under Rule 45 EPC, should the problems which led to the declaration being issued be overcome (see EPC Guideline C-VI, 8.5).<br>               -----| **CLASSIFICATION OF THE APPLICATION (IPC)** |
|---|---|
| | |

| Place of search | Date | Examiner |
|---|---|---|
| Munich | 13 June 2007 | Werner, Michael |

EPO FORM 1504 (P04C37)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006030640 A

- JP 2004116606 A